# EUROPEAN PATENT APPLICATION

(11) **EP 4 800 630 A1**
(43) Date of publication of application: **02.09.2026**
(21) Application number: 26158964.2
(22) Date of filing: 17.02.2026
(51) Int. Cl.: G06Q 30/0241, G06F 8/38, G06F 40/143, G06F 40/30, G06N 3/0475

(54) **NATURAL LANGUAGE DESCRIPTION BASED BANNER CREATION**

(30) Priority: 28.02.2025 US 202519067255
(71) Applicant: Rakuten Group, Inc., Setagaya-ku Tokyo 158-0094 (JP)
(72) Inventor: JACOB, Geethu Miriam, 560027 Bengaluru, Karnataka (IN); MANOJ, Kondapaka, 560027 Bengaluru, Karnataka (IN); SAHU, Sagar, 560027 Bengaluru, Karnataka (IN); RAHA, Poulami, 560027 Bengaluru, Karnataka (IN)
(74) Representative: Hoffmann Eitle

(57) **Abstract**

Natural language description based banner creation is implemented by extracting, from a natural language request, a plurality of attributes of a desired banner, selecting, from among a plurality of processes based on the plurality of attributes, a desired process to achieve the desired banner, planning, according to the desired process, a sequence of tasks, each task configured as an input for a predetermined task model among a plurality of task models to obtain a banner component of the desired banner, and executing the desired process to obtain, for each task, the banner component as output of the predetermined task model.

## Description

### FIELD

The present disclosure relates to natural language description based banner creation.

### BACKGROUND

The information disclosed in this background section is only for enhancement of understanding of the general background of the disclosure and should not be taken as an acknowledgement or any form of suggestion that this information forms the prior art already known to a person skilled in the art.

In the digital marketing landscape, banners are created to engage audiences and drive conversions. A banner creating process involves multiple tasks of designing, editing, and optimizing. As the digital marketing landscape changes, banners are edited to update or improve the content. For example, banners are edited for translation, compliance checking, or to revise a price or offer.

### SUMMARY

Natural language description based banner creation is implemented by extracting, from a natural language request, a plurality of attributes of a desired banner, selecting, from among a plurality of processes based on the plurality of attributes, a desired process to achieve the desired banner, planning, according to the desired process, a sequence of tasks, each task configured as an input for a predetermined task model among a plurality of task models to obtain a banner component of the desired banner, and executing the desired process to obtain, for each task, the banner component as output of the predetermined task model.

### BRIEF DESCRIPTION OF THE DRAWINGS

Features, aspects, and advantages of embodiments of the disclosure will be described below with reference to the accompanying drawings, in which like reference numerals denote like elements, and wherein:
FIG. 1 is a schematic diagram of a system for natural language description based banner creation, according to at least some embodiments of the subject disclosure.
FIG. 2 is a schematic diagram of an apparatus for natural language description based banner creation, according to at least some embodiments of the subject disclosure.
FIG. 3 is an operational flow for natural language description based banner creation, according to at least some embodiments of the subject disclosure.
FIG. 4 is a schematic diagram of an extraction prompt, according to at least some embodiments of the subject disclosure.
FIG. 5 is a schematic diagram of a desired banner attributes response, according to at least some embodiments of the subject disclosure.
FIG. 6 is a schematic diagram of a planning prompt, according to at least some embodiments of the subject disclosure.
FIG. 7 is a schematic diagram of a sequence of tasks, according to at least some embodiments of the subject disclosure.
FIG. 8 is a schematic diagram of a layout generation prompt, according to at least some embodiments of the subject disclosure.
FIG. 9 is a schematic diagram of banner code, according to at least some embodiments of the subject disclosure.
FIG. 10 is a schematic diagram of a rendered banner, according to at least some embodiments of the subject disclosure.
FIG. 11 illustrates an embodiment of apparatus 1100 for natural language description based banner creation, according to at least some embodiments of the subject disclosure.

### DETAILED DESCRIPTION

The following disclosure provides many different embodiments, or examples, for implementing different features of the provided subject matter. Specific examples of components, values, operations, materials, arrangements, or the like, are described below to simplify the present disclosure. These are, of course, merely examples and are not intended to be limiting. Other components, values, operations, materials, arrangements, or the like, are contemplated. In addition, the present disclosure may repeat reference numerals and/or letters in the various examples. This repetition is for the purpose of simplicity and clarity and does not in itself dictate a relationship between the various embodiments and/or configurations discussed.

It will be apparent that systems and/or methods, described herein, may be implemented in different forms of hardware, software, or a combination of hardware and software. The actual specialized control hardware or software code used to implement these systems and/or methods should not limit their implementations. Thus, the operation and behavior of the systems and/or methods are described herein without reference to specific software code. It is understood that software and hardware may be designed to implement the systems and/or methods based on the description herein.

Even though particular combinations of features are recited in the claims and/or disclosed in the specification, the particular combinations are not intended to limit the disclosure of implementations. In fact, many of these features may be combined in ways not specifically recited in the claims and/or disclosed in the specification. Even if a dependent claim directly depends on only one claim, the present disclosure may indicate that the dependent claim is dependent on other claims in the claim set.

No element, act, or instruction used herein should be construed as critical or essential unless explicitly described as such. Also, as used herein, the articles "a" and "an" (in other words, nouns not mentioned in the plural) are intended to include one or more items, and may be used interchangeably with "one or more." Also, as used herein, the terms "has," "have," "having," "include," "including," or the like are intended to be open-ended terms. Further, the phrase "based on" is intended to mean "based, at least in part, on" unless explicitly stated otherwise. Furthermore, expressions such as "at least one of [A] and [B]," "[A] and/or [B]," or "at least one of [A] or [B]" are to be understood as including only A, only B, or both A and B.

In the present disclosure, specific tasks may be performed using AI/ML (Artificial Intelligence/Machine Learning) models. An AI/ML model is a model generated using one or more AI technologies, one or more ML algorithm or both, and generates output data based on input data. This output data is used to perform tasks. Tasks performed using AI/ML models include those generally referred to as intellectual tasks, such as classification, prediction, natural language processing, etc.

Although AI and ML are explained separately, ML is a technology included in AI. In ML, instead of being explicitly programmed for a specific task, systems can improve their performance over time by identifying patterns and making inferences from training data. Typically, the generation of ML models includes data collection, model training, and model inference. Data collection involves gathering and preprocessing data to be used for training and inference. Model training involves developing and validating models using the collected data. Model inference involves applying the trained models to new data to generate new output data and perform tasks.

Machine learning includes various types of learning methods such as supervised learning, unsupervised learning, reinforcement learning, semi-supervised learning, self-supervised learning, transductive learning, transfer learning, meta learning, and the like. These types of learning methods can be appropriately selected according to the embodiments. Unless otherwise specified, the application of types not mentioned in this description is not precluded. Additionally, the structure of ML models may vary depending on the embodiments and learning methods, and is not limited to the methods disclosed. Furthermore, ML includes deep learning, which uses models that include neural networks. Deep learning models may include, for example, deep neural networks (DNNs), convolutional neural networks (CNNs), etc.

It should be noted that the AI/ML models presented hereinafter are examples and are not limited to the illustrated AI/ML models. They can be modified or altered by using different AI or ML algorithms. The configuration of the neural network is not limited to the configuration disclosed in the present disclosure and can be modified.

The multiple tasks involved in banner creation are often fragmented and time-consuming. Solutions known to the inventors typically require manual input for each task, leading to inefficiencies and inconsistencies in banner quality. Ultimately, the time required to generate a banner of desired quality exceeds a banner generation rate at which many merchants desire.

At least some embodiments of the present disclosure provide a solution in the form of a system that transforms a natural language description of a desired banner into reality with little or no further input. In at least some embodiments, a first engineered prompt is combined with the description of the desired banner and input to a generative language model to extract attributes including a desired banner process and desired banner features. In at least some embodiments, a second engineered prompt is combined with the attributes and input to the generative language model to plan a sequence of tasks for achieving the desired banner. In at least some embodiments, the sequence of tasks is executed, each task utilizing a model trained specifically for the task to obtain a component of the desired banner. In at least some embodiments, the components are collected and assembled into code for the banner.

By utilizing the systems of at least some embodiments of the present disclosure, time spent on manual tasks is reduced by automating attribute extraction and task sequencing. By referring to a catalog of desired processes in accordance with at least some embodiments of the present disclosure, the system is expandable to accommodate additional banner-related processes by adding them to the catalog, such as quality assurance and compliance, etc. In at least some embodiments, the system enables expansion to accommodate additional banner-related functions. In at least some embodiments, the system enables uniformity in banner quality through standardized processes. In at least some embodiments, the system simplifies complex workflows into a single interface for ease of use.

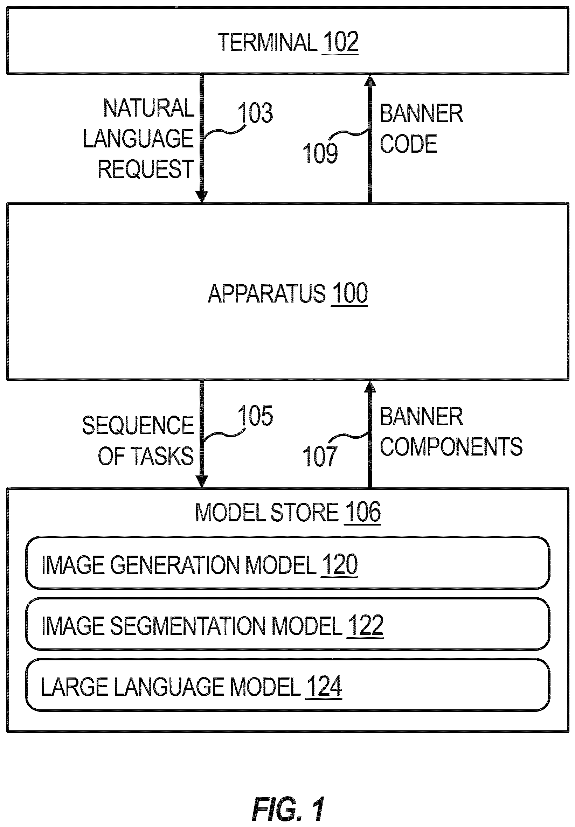

FIG. 1 is a schematic diagram of a system for natural language description based banner creation, according to at least some embodiments of the subject disclosure. The system for natural language description based banner creation includes apparatus 100, terminal 102, and model store 106.

Apparatus 100 is a component of the system for natural language description-based banner creation, and includes attribute extractor 110, task planner 116, and generator 119. In at least some embodiments, apparatus 100 is the central processing unit for the banner creation system. In at least some embodiments, apparatus 100 is made up of integrated circuits, processors, memory units, and software. In at least some embodiments, apparatus 100 is configured to manage and coordinate the execution of tasks and processes. In at least some embodiments, apparatus 100 does this through integrated circuits and software. In at least some embodiments, apparatus 100 is configured to receive natural language requests, such as natural language request 103, from terminal 102. In at least some embodiments, apparatus 100 is configured to transmit tasks, such as sequence of tasks 105, to one or more models of model store 106. In at least some embodiments, apparatus 100 is configured to receive banner components, such as banner components 107, from one or more models of model store 106. In at least some embodiments, apparatus 100 is configured to transmit banner code, such as banner code 109, to terminal 102. In at least some embodiments, apparatus 100 is configured to use predefined models and algorithms to execute tasks. In at least some embodiments, apparatus 100 is configured to execute tasks using models from model store 106.

Terminal 102 is a component of the system for natural language description-based banner creation. In at least some embodiments, terminal 102 produces a user interface for inputting natural language descriptions and displaying generated banners. In at least some embodiments, terminal 102 is made up of a display screen, keyboard, mouse, and interface software. In at least some embodiments, terminal 102 is configured to provide an interface for user input and output. In at least some embodiments, terminal 102 is configured to receive input, such as natural language request 103, from users and transmit the input to apparatus 100. In at least some embodiments, terminal 102 is configured to receive banner code, such as banner code 109, from apparatus 100, and to render the banner code for display.

Model store 106 is a component of the system for natural language description-based banner creation. In at least some embodiments, model store 106 stores various models, such as image generation model 120, image segmentation model 122, and Large Language Model (LLM) 124. In at least some embodiments, model store 106 is made up of a database of models, version control system, and access management tools. In at least some embodiments, model store 106 is configured to store and manage models. In at least some embodiments, model store 106 is configured to maintain a repository of models and provide access to the models. In at least some embodiments, model store 106 is configured to store various models used for different tasks in the banner creation process, such as layout prediction, Optical Character Recognition (OCR), object segmentation, image generation, text translation, text box detection, product detection, image inpainting, compliance, Click-Through Rate (CTR) prediction, etc. In at least some embodiments, model store 106 is configured to provide apparatus 100 access to models for executing specific tasks.

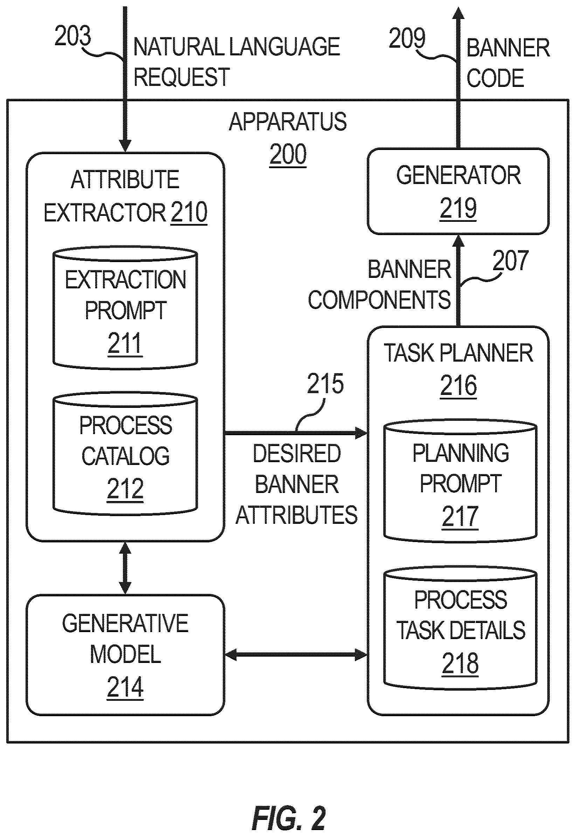

FIG. 2 is a schematic diagram of an apparatus 200 for natural language description based banner creation, according to at least some embodiments of the subject disclosure. Apparatus 200 includes attribute extractor 210, generative model 214, task planner 216, and generator 219. The descriptions of apparatus 100 with respect to FIG. 1 are generally applicable to apparatus 200 unless in conflict with the following.

Attribute extractor 210 is a component of apparatus 200 and includes extraction prompt 211 and process catalog 212. In at least some embodiments, attribute extractor 210 is configured to use machine learning algorithms and trained models. In at least some embodiments, attribute extractor 210 is configured to extract attributes from natural language requests, such as natural language request 203. In at least some embodiments, attribute extractor 210 is configured to communicate with generative model 214 to facilitate attribute extraction. In at least some embodiments, attribute extractor 210 is configured to transmit extracted attributes, such as desired banner attributes 215, to task planner 216. In at least some embodiments, extracted attributes, such as desired banner attributes 215, include text, images, and links. In at least some embodiments, attribute extractor 210 is configured to output structured attributes to task planner 216. In at least some embodiments, attribute extractor 210 is configured to combine natural language request 203 with extraction prompt 211 and process catalog 212 as input to generative model 214. In at least some embodiments, attribute extractor 210 is configured to guide generative model 214 to match the extracted attributes with an appropriate process from process catalog 212.

Extraction prompt 211 is a data component of attribute extractor 210. In at least some embodiments, extraction prompt 211 is configured to guide a generative model, such as generative model 214, to output attributes in a structured format. In at least some embodiments, extraction prompt 211 is made up of templates, rules, predefined formats, etc. In at least some embodiments, extraction prompt 211 is configured to specify default values for missing attributes. In at least some embodiments, extraction prompt 211 instructs the generative language model to utilize a default attribute in response to being unable to extract a corresponding attribute among the plurality of attributes from the natural language request. In at least some embodiments, extraction prompt 211 is configured to instruct generative model 214 to request further input of missing attributes. In at least some embodiments, extraction prompt 211 instructs the generative language model to request further input in response to being unable to extract a corresponding attribute among the plurality of attributes from the natural language request.

Process catalog 212 is a data component of attribute extractor 210. In at least some embodiments, process catalog 212 stores a list of possible processes for banner creation. In at least some embodiments, the desired process is one of banner generation, banner editing, banner translation, banner checking, banner Click-Through Rate (CTR) prediction, etc. In at least some embodiments, process catalog 212 is made up of various components, including database structure, index files, catalog entries, and process definitions. In at least some embodiments, process catalog 212 is a repository of processes maintained by apparatus 200.

Generative model 214 is a component of apparatus 200. In at least some embodiments, generative model 214 is configured to process natural language prompts to produce output. In at least some embodiments, generative model 214 is made up of neural networks, machine learning frameworks, etc. In at least some embodiments, generative model 214 includes various components including Natural Language Processing (NLP) algorithms, machine learning models, text processing software, algorithms, NLP models, and data parsers. In at least some embodiments, generative model 214 is configured to extract relevant information from text. In at least some embodiments, generative model 214 is configured to analyze text using NLP techniques. In at least some embodiments, generative model 214 is configured to generate output data based on input data. In at least some embodiments, generative model 214 is configured to receive input from attribute extractor 210 and output attributes, such as desired banner attributes 215. In at least some embodiments, generative model 214 is configured to receive input from task planner 216 and output a sequence of tasks for obtaining banner components.

Task planner 216 is a component of apparatus 200 and includes planning prompt 217 and process task details 218. In at least some embodiments, task planner 216 is configured to plan the sequence of tasks required to create the desired banner based on the extracted attributes and desired process. In at least some embodiments, task planner 216 is made up of various components, including task scheduling algorithms, dependency graphs, optimization software, workflow engines, and task schedulers. In at least some embodiments, task planner 216 is configured to use machine learning algorithms and trained models for planning and sequencing tasks for various processes. In at least some embodiments, task planner 216 is configured to use algorithms to determine the optimal sequence of tasks based on dependencies and requirements. In at least some embodiments, task planner 216 is configured to receive attributes, such as desired banner attributes 215, from attribute extractor 210. In at least some embodiments, task planner 216 is configured to determine dependencies between tasks and ensure tasks are executed in the correct order. In at least some embodiments, task planner 216 is configured to combine desired banner attributes 215 with planning prompt 217 and process task details 218 for input to generative model 214. In at least some embodiments, task planner 216 is configured to execute the sequence of tasks using various models of a model store to obtain banner components, such as banner components 207. In at least some embodiments, task planner 216 is configured to transmit banner components, such as banner components 207, to generator 219.

Planning prompt 217 is a data component of task planner 216. In at least some embodiments, planning prompt 217 is configured to inform generative model 214 about tasks and their order. In at least some embodiments, planning prompt 217 is configured to inform the generative language model of each of the plurality of task models. In at least some embodiments, planning prompt 217 is made up of templates, rules, predefined formats, etc. In at least some embodiments, planning prompt 217 is configured to provide structured guidance for task planning to generative model 214. In at least some embodiments, planning prompt 217 is configured to use predefined templates and rules for structuring task sequences. In at least some embodiments, planning prompt 217 is configured to specify task execution order and ensure tasks are planned in a logical sequence in the context of apparatus for natural language description-based banner creation.

Process task details 218 is a data component of task planner 216. In at least some embodiments, process task details 218 contain specific details about each task of each process and outline the specific tasks required to achieve desired banners, including dependencies and order of execution. In at least some embodiments, process task details 218 are made up of documentation, metadata files, task lists, process maps, workflow diagrams, etc. In at least some embodiments, process task details 218 include task-specific information, detailed task descriptions, parameters, and requirements. In at least some embodiments, process task details 218 is updated with task details based on new requirements. In at least some embodiments, process task details 218 are configured to detail the steps and processes needed to complete a task or project, break down the task into smaller, manageable steps, and sequence the steps logically.

Generator 219 is a component of apparatus 200. In at least some embodiments, generator 219 is a component that executes the planned tasks to generate the banner, assembling the components into the final code based on the components obtained from each task. In at least some embodiments, generator 219 is made up of various components, including machine learning models, image processing software, code generation tools, code templates, and rendering engines. In at least some embodiments, generator 219 is configured to generate banner code, such as banner code 209, from individual banner components, such as banner components 207. In at least some embodiments, generator 219 is configured to transmit the final banner code, such as banner code 209, for display. In at least some embodiments, generator 219 is configured to use code generation and template rendering. In at least some embodiments, generator 219 is configured to convert banner components into renderable code. In at least some embodiments, generator 219 is configured to integrate all banner components correctly into banner code 209.

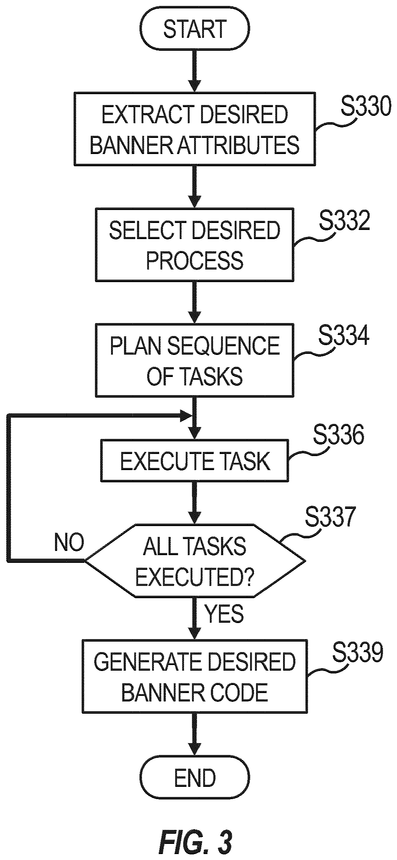

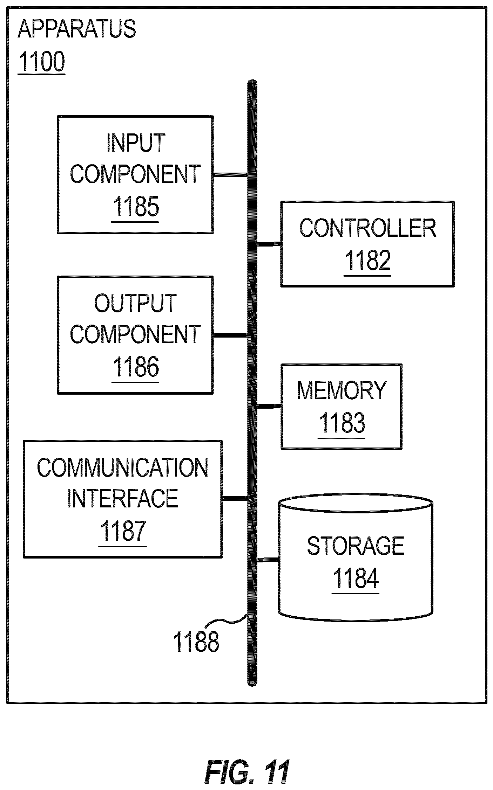

FIG. 3 is an operational flow for natural language description based banner creation, according to at least some embodiments of the subject disclosure. In at least some embodiments, the operational flow provides a method of natural language description based banner creation. In at least some embodiments, the method is performed by a controller of an apparatus, such as controller 1182 of apparatus 1100 of FIG. 11, described hereinafter.

At S330, the controller extracts the desired banner attributes. In at least some embodiments, the controller extracts, from a natural language request, a plurality of attributes of a desired banner. In at least some embodiments, the controller combines the natural language request and an extraction prompt. In at least some embodiments, the controller combines the natural language request with an extraction prompt and a process catalog. In at least some embodiments, the controller parses the natural language request for keywords. In at least some embodiments, the controller identifies context-specific terms. In at least some embodiments, the controller utilizes natural language processing (NLP) tools and a keyword database. In at least some embodiments, the controller varies keyword sensitivity, context relevance, and attribute mapping rules. In at least some embodiments, the controller applies a generative language model to the natural language request and the extraction prompt. In at least some embodiments, the controller applies a generative model to the natural language request as combined with the extraction prompt and the process catalog in order to cause extraction of the desired banner attributes.

At S332, the controller selects the desired process. In at least some embodiments, the controller selects, from among a plurality of processes based on the plurality of attributes, a desired process to achieve the desired banner. In at least some embodiments, the controller analyzes the extracted attributes. In at least some embodiments, the controller compares the attributes with process requirements. In at least some embodiments, the controller evaluates process suitability based on attributes. In at least some embodiments, the controller utilizes a process requirement database and an attribute-process matching algorithm. In at least some embodiments, the controller applies a generative model to the natural language request as combined with the extraction prompt and the process catalog in order to cause selection of the desired process.

At S334, the controller plans the sequence of tasks. In at least some embodiments, the controller plans, according to the desired process, a sequence of tasks, each task configured as an input for a predetermined task model among a plurality of task models to obtain a banner component of the desired banner. In at least some embodiments, the controller combines the plurality of attributes, the desired process, and a planning prompt. In at least some embodiments, the controller combines the extracted attributes and desired process with a planning prompt and process task details. In at least some embodiments, the controller generates an initial task list based on the process. In at least some embodiments, the controller plans a layout generation task among the sequence of tasks. In at least some embodiments, the controller refines the task list by removing redundancies. In at least some embodiments, the controller utilizes a task dependency graph and task refinement rules. In at least some embodiments, the controller orders the sequence of tasks based on dependencies between tasks. In at least some embodiments, the controller varies redundancy criteria, dependency validation rules, and task sequence optimization. In at least some embodiments, the controller applies a generative language model to the natural language request, the desired process, and the planning prompt. In at least some embodiments, the controller applies a generative model to the extracted attributes and desired process as combined with the planning prompt and process task details in order to cause planning of the sequence of tasks.

At S336, the controller executes a task. In at least some embodiments, the controller executes a task among the sequence of tasks. In at least some embodiments, the controller accesses a task model from the model store. In at least some embodiments, the controller applies the task model to a task input to obtain a banner component. In at least some embodiments, the controller utilizes a task model, input parameters, and execution conditions in accordance with the task. In at least some embodiments, the controller executes the layout generation task to acquire a banner layout. In at least some embodiments, as iterations of S336 proceed the controller executes the desired process to obtain, for each task, the banner component as output of the predetermined task model.

At S337, the controller determines whether all tasks have been executed. In response to the controller determining that all tasks have not been executed, the operational flow returns to task execution at S336. In response to the controller determining that all tasks have been executed, the operational flow proceeds to banner code generation at S339. In at least some embodiments, the controller determines whether all tasks in the sequence are completed. In at least some embodiments, the controller reviews task completion logs. In at least some embodiments, the controller identifies any incomplete tasks or failed tasks. In at least some embodiments, the controller compares the sequence of tasks with a task completion status.

At S339, the controller generates the desired banner code. In at least some embodiments, the controller generates code for the desired banner based on the banner component. In at least some embodiments, the controller assembles all banner components obtained from executing the tasks. In at least some embodiments, the controller generates the code according to the banner layout. In at least some embodiments, the controller generates the code including raw image data. In at least some embodiments, the controller integrates the banner components with a layout template. In at least some embodiments, the controller optimizes the code for performance and compatibility. In at least some embodiments, the controller utilizes validation standards. In at least some embodiments, the controller verifies performance metrics, applies compatibility checks, and compares with validation criteria.

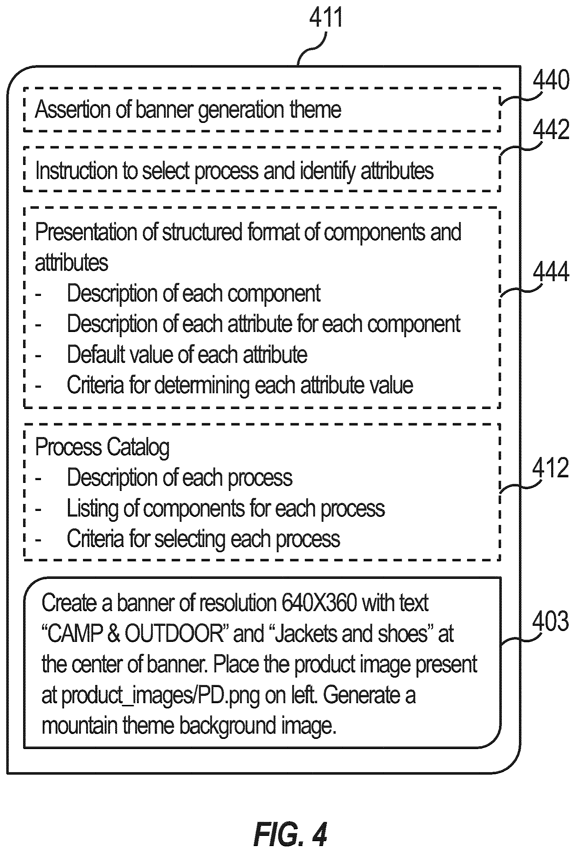

FIG. 4 is a schematic diagram of an extraction prompt 411, according to at least some embodiments of the subject disclosure. Extraction prompt 411 includes theme assertion 440, instruction 442, structured format presentation 444, process catalog 412, and natural language request 403. The descriptions of extraction prompt 211 with respect to FIG. 2 are generally applicable to extraction prompt 411 unless in conflict with the following. The descriptions of process catalog 212 with respect to FIG. 2 are generally applicable to process catalog 412 unless in conflict with the following.

Theme assertion 440 is a data component of extraction prompt 411. In at least some embodiments, theme assertion 440 is a component that asserts the main theme of banner generation. In at least some embodiments, theme assertion 440 is configured to assert the central topic or idea. In at least some embodiments, theme assertion 440 is configured to establish the main idea or concept of banner creation. In at least some embodiments, theme assertion 440 is configured to cause a generative model to assume a profession or mindset. In at least some embodiments, theme assertion 440 is configured to alert a generative model of the general scope of the input that follows.

Instruction 442 is a data component of extraction prompt 411. In at least some embodiments, instruction 442 is a component that provides specific instructions to a generative language model. In at least some embodiments, instruction 442 is made up of various components, including instruction sets, rule-based systems, guidelines, procedural guidelines, user manuals, step-by-step guidelines, procedural text, etc. In at least some embodiments, instruction 442 is configured to guide the selection of a process and extraction of attributes. In at least some embodiments, instruction 442 is configured to direct the model on how to process the natural language request. In at least some embodiments, instruction 442 is configured to use clear, concise language to outline the steps or guidelines. In at least some embodiments, instruction 442 is configured to specify the exact steps and elements required for process selection and attribute identification. In at least some embodiments, extraction prompt 411 instructs the generative language model to output the plurality of attributes in a structured format.

Structured format presentation 444 is a data component of extraction prompt 411. In at least some embodiments, structured format presentation 444 exemplifies how extracted attributes are formed into a structured format. In at least some embodiments, the structured format is one of JavaScript Object Notation (JSON), eXtensible Markup Language (XML), Yet Another Markup Language (YAML), etc. In at least some embodiments, structured format presentation 444 is made up of formatting templates, data structuring algorithms, examples, etc. In at least some embodiments, structured format presentation 444 guides the generative model to output in a machine-readable and standardized format. In at least some embodiments, structured format presentation 444 includes a description of each component, a description of each attribute for each component, a default value of each attribute, criteria for determining each attribute value, etc.

Process catalog 412 is a data component of extraction prompt 411. In at least some embodiments, process catalog 412 includes a description of each process, a listing of components for each process, criteria for selecting each process, etc.

Natural language request 403 is a data component of extraction prompt 411. In at least some embodiments, natural language request 403 is a component that serves as the initial input describing the desired banner. In at least some embodiments, natural language request 403 is made up of natural language text originally entered by a user. In at least some embodiments, natural language request 403 is configured to provide the user's requirements and specifications.

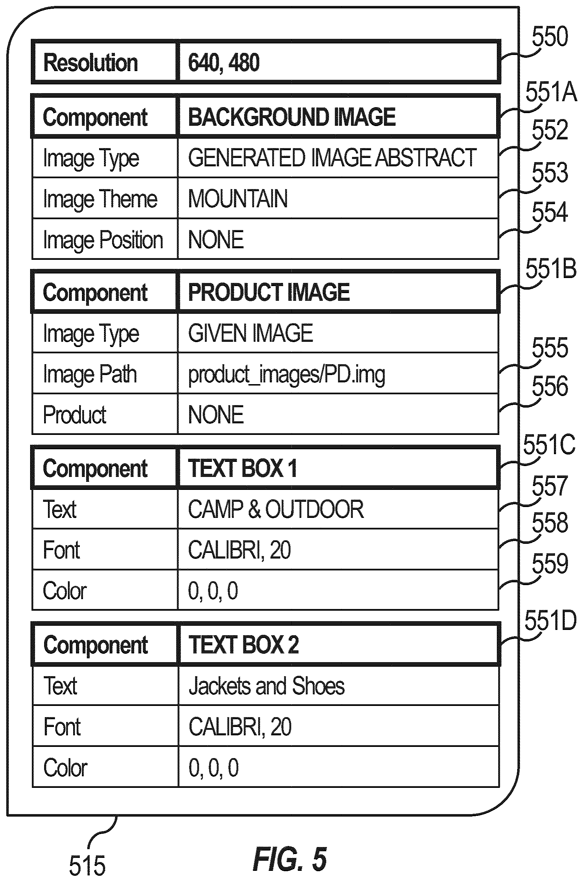

FIG. 5 is a schematic diagram of desired banner attributes 515, according to at least some embodiments of the subject disclosure. Desired banner attributes 515 includes resolution attribute 550, components 551A, 551B, 551C, and 551D, image type attribute 552, image theme attribute 553, image position attribute 554, image path attribute 555, product attribute 556, text attribute 557, font attribute 558, and color attribute 559.

In at least some embodiments, desired banner attributes 515 includes components that list the attributes extracted from the natural language request. In at least some embodiments, desired banner attributes 515 specifies features and elements for the banner to include. In at least some embodiments, desired banner attributes 515 include attribute lists, feature specifications, requirement documents, design requirements, etc. In at least some embodiments, desired banner attributes 515 are configured to specify the characteristics or features required for the desired banner. In at least some embodiments, desired banner attributes 515 list preferred features and elements, such as text, images, colors, and layout.

Resolution attribute 550 is a data component of desired banner attributes 515. In at least some embodiments, resolution attribute 550 is a component that specifies the resolution of the banner. In at least some embodiments, resolution attribute 550 is specified as pixels, PPI/DPI settings, etc. In at least some embodiments, resolution attribute 550 sets the number of pixels per inch (PPI) or dots per inch (DPI).

Components 551A, 551B, 551C, and 551D are data components of desired banner attributes 515. In at least some embodiments, components 551A, 551B, 551C, and 551D represent different parts of a banner, such as a text box, an image box, a background image, etc. In at least some embodiments, components 551A, 551B, 551C, and 551D are configured to define individual elements of a design. In at least some embodiments, components 551A, 551B, 551C, and 551D are configured to represent different parts of the banner in the context of a desired banner. In at least some embodiments, attributes are divided among components 551A, 551B, 551C, and 551D to inform further processes of the component that corresponds to the attribute.

Image type attribute 552 is a data component of desired banner attributes 515. In at least some embodiments, image type attribute 552 is a component that whether the image to be used is to be generated or is provided. In at least some embodiments, image type attribute 552 is a component that specifies the type of image to be used (e.g., JPEG, PNG). In at least some embodiments, image type attribute 552 is made up of file format specifications. In at least some embodiments, image type attribute 552 is configured to define the format of an image file.

Image theme attribute 553 is a data component of desired banner attributes 515. In at least some embodiments, image theme attribute 553 is a component that defines the overall theme or style of the image. In at least some embodiments, image theme attribute 553 is made up of color palettes, design templates, etc. In at least some embodiments, image theme attribute 553 is specified for images to be generated.

Image position attribute 554 is a data component of desired banner attributes 515. In at least some embodiments, image position attribute 554 is a component that specifies where the image should be placed on the banner. In at least some embodiments, image position attribute 554 is made up of X and Y coordinates, alignment settings, etc.

Image path attribute 555 is a data component of desired banner attributes 515. In at least some embodiments, image path attribute 555 is a component that provides the file path, Uniform Resource Locator (URL), or link to the image. In at least some embodiments, image path attribute 555 is configured to locate and access image files.

Product attribute 556 is a data component of desired banner attributes 515. In at least some embodiments, product attribute 556 is a component that specifies whether an image component is a product to be featured in the banner. In at least some embodiments, product attribute 556 is specified as a binary.

Text attribute 557 is a data component of desired banner attributes 515. In at least some embodiments, text attribute 557 is a component that specifies the text to be included in the banner. In at least some embodiments, text attribute 557 is made up of a text string. In at least some embodiments, text attribute 557 is configured to define the written content of the banner.

Font attribute 558 is a data component of desired banner attributes 515. In at least some embodiments, font attribute 558 is a component that specifies the font style for the text. In at least some embodiments, font attribute 558 represents font files, style settings, etc. In at least some embodiments, font attribute 558 is configured to define the appearance of text. In at least some embodiments, font attribute 558 is configured to do this by setting font type, size, and weight.

Color attribute 559 is a data component of desired banner attributes 515. In at least some embodiments, color attribute 559 is a component that specifies the color scheme for a component of the banner. In at least some embodiments, color attribute 559 is made up of color codes, palettes, etc. In at least some embodiments, color attribute 559 is configured to define the color properties of elements. In at least some embodiments, color attribute 559 is configured to do this by setting color values (e.g., RGB, HEX). In at least some embodiments, color attribute 559 is configured to specify a text color.

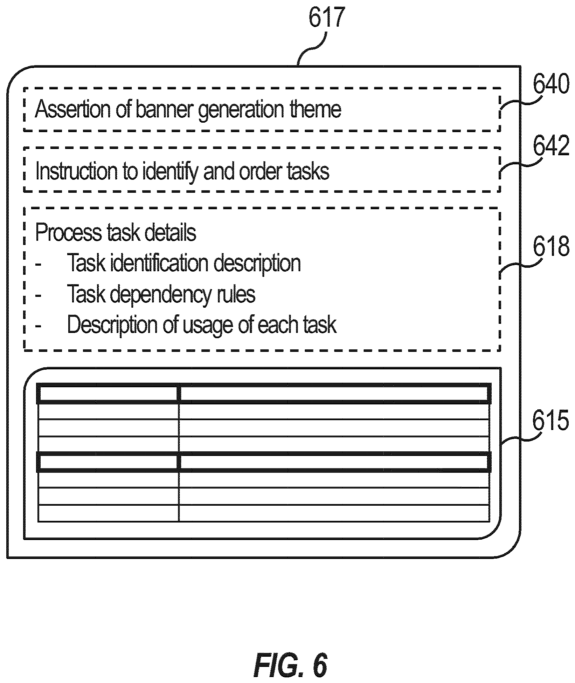

FIG. 6 is a schematic diagram of a planning prompt 617, according to at least some embodiments of the subject disclosure. The planning prompt includes theme assertion 640, instruction 642, process task details 618, and desired banner attributes 615. The descriptions of planning prompt 217 with respect to FIG. 2 are generally applicable to planning prompt 617 unless in conflict with the following. The descriptions of process task details 218 with respect to FIG. 2 are generally applicable to process task details 618 unless in conflict with the following. The descriptions of theme assertion 440 with respect to FIG. 4 are generally applicable to theme assertion 640 unless in conflict with the following. The descriptions of instruction 442 with respect to FIG. 4 are generally applicable to instruction 642 unless in conflict with the following. The descriptions of desired banner attributes 515 with respect to FIG. 5 are generally applicable to desired banner attributes 615 unless in conflict with the following.

Instruction 642 is a data component of planning prompt 617. In at least some embodiments, instruction 642 is configured to direct the generative language model on how to process the attributes and plan the tasks in the context of a planning prompt. In at least some embodiments, instruction 642 is configured to guide the identification and ordering of tasks. In at least some embodiments, instruction 642 is configured to specify the exact steps and elements required for identification and ordering of the sequence of tasks.

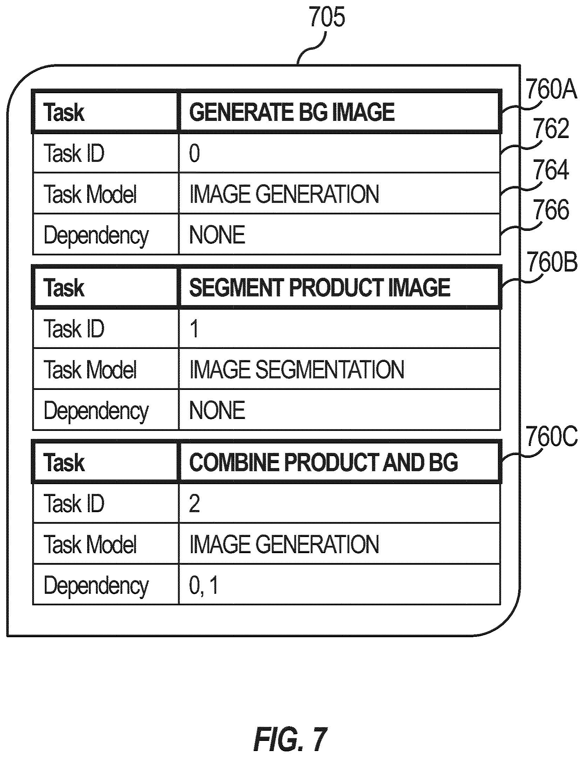

FIG. 7 is a schematic diagram of a sequence of tasks 705, according to at least some embodiments of the subject disclosure. Sequence of tasks 705 includes tasks 760A, 760B, and 760C, task identifier 762, task model 764, and dependency 766.

Tasks 760A, 760B, and 760C are data components of sequence of tasks 705. In at least some embodiments, tasks 760A, 760B, and 760C are specific actions to be performed to create or edit a banner component. In at least some embodiments, tasks 760A, 760B, and 760C are made up of task identifiers, models, and dependencies. In at least some embodiments, tasks 760A, 760B, and 760C are configured to perform specific functions or operations. In at least some embodiments, tasks 760A, 760B, and 760C utilize predefined models or algorithms to generate banner components.

Task identifier 762 is a data component of sequence of tasks 705. In at least some embodiments, task identifier 762 is a unique identifier for task 760A within the sequence. In at least some embodiments, task identifier 762 is made up of alphanumeric codes or labels. In at least some embodiments, task identifier 762 enables each task to be correctly referenced and executed in proper order.

Task model 764 is a data component of sequence of tasks 705. In at least some embodiments, task model 764 represents the specific model or algorithm used to perform a task. In at least some embodiments, task model 764 interacts with task identifiers to enable the correct model to be used for each task.

Dependency 766 is a data component of sequence of tasks 705. In at least some embodiments, dependency 766 represents dependencies between tasks, enabling execution in correct order. In at least some embodiments, dependency 766 includes references to other tasks. In at least some embodiments, dependency 766 includes task identifiers of other tasks.

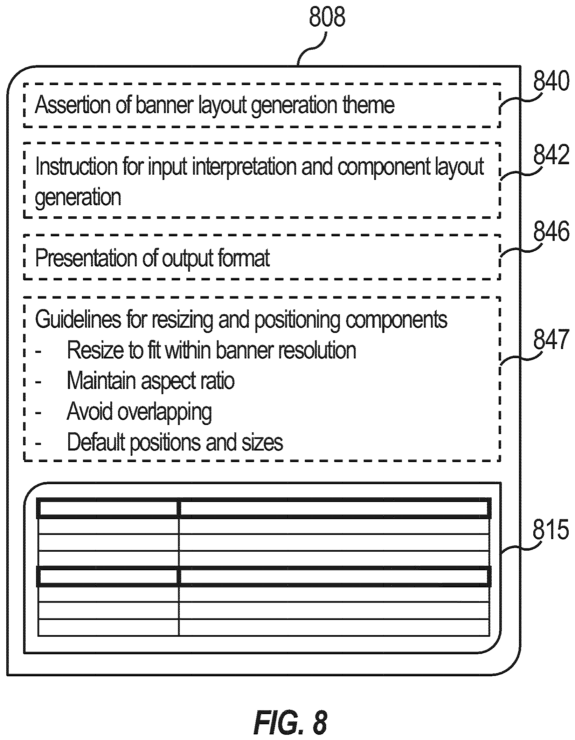

FIG. 8 is a schematic diagram of a layout generation prompt 808, according to at least some embodiments of the subject disclosure. Layout generation prompt 808 includes theme assertion 840, instruction 842, output format presentation 846, guidelines 847, and desired banner attributes 815. The descriptions of theme assertion 440 with respect to FIG. 4 are generally applicable to theme assertion 840 unless in conflict with the following. The descriptions of instruction 442 with respect to FIG. 4 are generally applicable to instruction 842 unless in conflict with the following. The descriptions of desired banner attributes 515 with respect to FIG. 5 are generally applicable to desired banner attributes 815 unless in conflict with the following.

Theme assertion 840 is a data component of layout generation prompt 808. In at least some embodiments, theme assertion 840 is configured to establish the main idea or concept of banner layout generation.

Instruction 842 is a component of layout generation prompt 808. In at least some embodiments, instruction 842 is configured to guide the interpretation of input and generation of component layout. In at least some embodiments, instruction 842 is configured to specify the exact steps and elements required for interpreting input and generating component layout.

Output format presentation 846 is a data component of layout generation prompt 808. In at least some embodiments, output format presentation 846 is a component that is configured to specify a format in which the banner layout should be generated. In at least some embodiments, output format presentation 846 is made up of formatting rules, data structure definitions, presentation standards, etc. In at least some embodiments, output format presentation 846 is configured to set rules and standards for how banner components should be organized and displayed. In at least some embodiments, output format presentation 846 is configured to specify format in which banner layout should be presented, such as JSON, XML, YAML, etc.

Guidelines 847 is a data component of layout generation prompt 808. In at least some embodiments, guidelines 847 are configured to provide rules and best practices for resizing and positioning components. In at least some embodiments, guidelines 847 includes directions to resize components to fit within banner resolution, maintain aspect ratio, avoid overlapping, etc. In at least some embodiments, guidelines 847 includes default positions and sizes for components that lack specification from desired banner attributes 815.

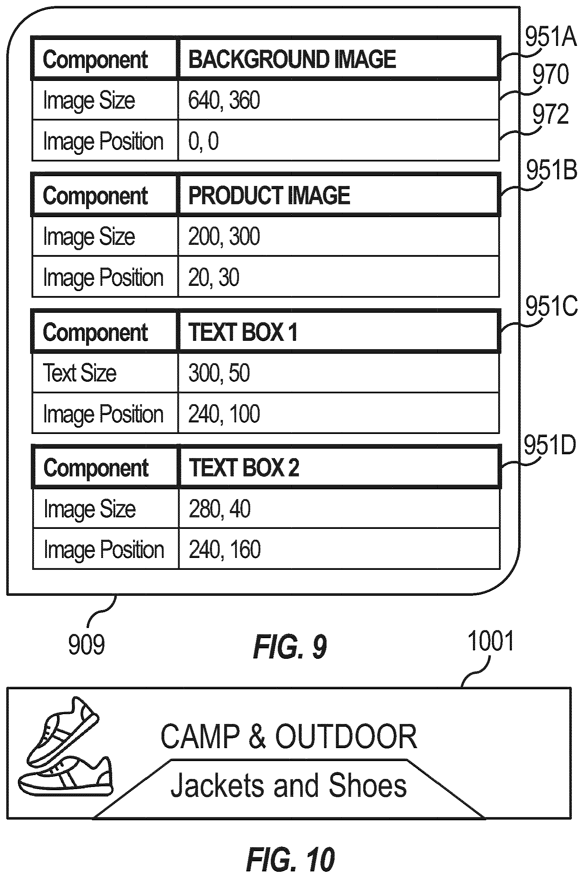

FIG. 9 is a schematic diagram of a portion of banner code 909, according to at least some embodiments of the subject disclosure. Banner code 909 includes components 951A, 951B, 951C, and 951D, image size code 970, and image position code 972.

Components 951A, 951B, 951C, and 951D are data components of banner code 909. In at least some embodiments, components 951A, 951B, 951C, and 951D are elements that define the banner's background, text content, image placement, etc. In at least some embodiments, components 951A, 951B, 951C, and 951D are encoded in HyperText Markup Language (HTML), Cascading Style Sheets (CSS), JavaScript, Scalable Vector Graphics (SVG), etc. In at least some embodiments, components 951A, 951B, 951C, and 951D utilize HTML, CSS, JavaScript, etc. to render and control backgrounds, text, images, etc.

Image size code 970 is a data component of banner code 909. In at least some embodiments, image size codes, such as image size code 970, represent dimensions for images used in banner. In at least some embodiments, image size code 970 represents the image size of component 951A. In at least some embodiments, image size code 970 together with image position code enables images to be correctly sized and placed within a rendering of the desired banner.

Image position code 972 is a data component of banner code 909. In at least some embodiments, image position codes, such as image position code 972, represents coordinates for image placement. In at least some embodiments, image position code 972 is made up of coordinates, alignment properties, z-index values, etc. In at least some embodiments, image position code 972 represents the image position of component 951A.

FIG. 10 is a schematic diagram of a rendered banner 1001, according to at least some embodiments of the subject disclosure. In at least some embodiments, rendered banner 1001 is the result of rendering of banner code, such as banner code 109 by a terminal, such as terminal 102. In at least some embodiments, a terminal displays rendered banner 1001 on a screen. In at least some embodiments, a terminal displays rendered banner 1001 in a manner viewable by a user.

FIG. 11 illustrates an embodiment of apparatus 1100 for natural language description based banner creation, according to at least some embodiments of the subject disclosure. As shown in FIG. 11, apparatus 1100 includes controller 1182, memory 1183, storage 1184, input component 1185, output component 1186, communication interface 1187, and bus 1188. controller 1182, as used herein, means any type of computational circuit that may comprise hardware elements and software elements. controller 1182 may be embodied as a multi-core processor, a single core processor, or a combination of one or more multi-core processors and/or one or more single core processors, a distributed processing system, or the like. controller 1182 may be a Central Processing Unit (CPU), a graphics processing unit (GPU), an accelerated processing unit (APU), an application-specific integrated circuit (ASIC), or another type of processing component.

Memory 1183 includes a non-transitory computer readable medium. memory 1183 includes a random-access memory (RAM), a read only memory (ROM), and/or another type of dynamic or static storage device (e.g., a flash memory, a magnetic memory, and/or an optical memory) that stores information and/or instructions for use by controller 1182. The memory 1183 comprises machine-readable instructions which are executable by controller 1182. These machine-readable instructions when executed by controller 1182 cause controller 1182 to perform one or more method steps of an embodiment described above.

Storage 1184 stores information and/or software related to the operation and use of the apparatus 1100. For example, storage 1184 may include a hard disk (e.g., a magnetic disk, an optical disk, a magneto-optic disk, and/or a solid-state disk), a compact disc (CD), a digital versatile disc (DVD), a floppy disk, a cartridge, a magnetic tape, and/or another type of non-transitory computer-readable medium, along with a corresponding drive.

Input component 1185 is configured to receive information, such as user input. For example, the input component 1185 may include, but not be limited to, a touch screen display, a keyboard, a keypad, a mouse, a button, a switch, and/or a microphone. Additionally, or alternatively, the input component 1185 may include a sensor for sensing information (e.g., a global positioning system (GPS), an accelerometer, a gyroscope, and/or an actuator).

Output component 1186 is configured to provide output information from the apparatus 1100. For example, the output component 1186 may be, but not limited to, a display, a speaker, an instruction device to an external device, and/or one or more light-emitting diodes (LEDs).

Communication interface 1187 is an interface that provides a communication connection to other devices, such as external devices and internal devices. The connection by the communication interface 1187 can be a wired connection, a wireless connection, or a combination of wired and wireless connections, and can be a direct connection or an indirect connection via a communication network that exists between apparatus 1100 and other devices. In other words, the standard of the communication interface 1187 is not limited.

Bus 1188 acts as an interconnect between controller 1182, memory 1183, storage 1184, the input component 1185, the output component 1186, and the communication interface 1187 of apparatus 1100. The bus 1188 may include a wired interconnection or a wireless interconnection.

The number and arrangement of components shown in FIG. 11 are provided as an example. In practice, apparatus 1100 may include additional components, fewer components, different components, or differently arranged components than those shown in FIG. 11. Additionally, or alternatively, a set of components (e.g., one or more components) of apparatus 1100 may perform one or more functions described as being performed by another set of components of apparatus 1100. Further, one or more method steps described in any of the embodiments may be performed utilizing a plurality of apparatus 1100 in communication with one another.

In at least some embodiments, natural language description based banner creation is implemented by extracting, from a natural language request, a plurality of attributes of a desired banner, selecting, from among a plurality of processes based on the plurality of attributes, a desired process to achieve the desired banner, planning, according to the desired process, a sequence of tasks, each task configured as an input for a predetermined task model among a plurality of task models to obtain a banner component of the desired banner, and executing the desired process to obtain, for each task, the banner component as output of the predetermined task model.

In at least some embodiments, the extracting includes combining the natural language request and an extraction prompt, and applying a generative language model to the natural language request and the extraction prompt. In at least some embodiments, the extraction prompt instructs the generative language model to output the plurality of attributes in a structured format. In at least some embodiments, the structured format is one of JSON, XML, or YAML. In at least some embodiments, the extraction prompt instructs the generative language model to utilize a default attribute in response to being unable to extract a corresponding attribute among the plurality of attributes from the natural language request. In at least some embodiments, the extraction prompt instructs the generative language model to request further input in response to being unable to extract a corresponding attribute among the plurality of attributes from the natural language request. In at least some embodiments, the desired process is one of banner generation, banner editing, banner translation, banner checking, or banner Click-Through Rate (CTR) prediction. In at least some embodiments, the planning includes ordering the sequence of tasks based on dependencies between tasks. In at least some embodiments, the planning includes combining the plurality of attributes, the desired process, and a planning prompt, and applying a generative language model to the natural language request, the desired process, and the planning prompt. In at least some embodiments, the planning prompt informs the generative language model of each of the plurality of task models. In at least some embodiments, the planning includes planning a layout generation task among the sequence of tasks. In at least some embodiments, the executing includes executing the layout generation task to acquire a banner layout. In at least some embodiments, the generating includes generating the code according to the banner layout.

In at least some embodiments, natural language description based banner creation is implemented by extracting, from a natural language request, a plurality of attributes of a desired banner, selecting, from among a plurality of processes based on the plurality of attributes, a desired process to achieve the desired banner, planning, according to the desired process, a sequence of tasks, each task configured as an input for a predetermined task model among a plurality of task models to obtain a banner component of the desired banner, and executing the desired process to obtain, for each task, the banner component as output of the predetermined task model.

In at least some embodiments, the extracting includes combining the natural language request and an extraction prompt, and applying a generative language model to the natural language request and the extraction prompt. In at least some embodiments, the extraction prompt instructs the generative language model to output the plurality of attributes in a structured format. In at least some embodiments, the structured format is one of JSON, XML, or YAML. In at least some embodiments, the extraction prompt instructs the generative language model to utilize a default attribute in response to being unable to extract a corresponding attribute among the plurality of attributes from the natural language request. In at least some embodiments, the extraction prompt instructs the generative language model to request further input in response to being unable to extract a corresponding attribute among the plurality of attributes from the natural language request. In at least some embodiments, the desired process is one of banner generation, banner editing, banner translation, banner checking, or banner Click-Through Rate (CTR) prediction. In at least some embodiments, the planning includes ordering the sequence of tasks based on dependencies between tasks. In at least some embodiments, the planning includes combining the plurality of attributes, the desired process, and a planning prompt, and applying a generative language model to the natural language request, the desired process, and the planning prompt. In at least some embodiments, the planning prompt informs the generative language model of each of the plurality of task models. In at least some embodiments, the planning includes planning a layout generation task among the sequence of tasks. In at least some embodiments, the executing includes executing the layout generation task to acquire a banner layout. In at least some embodiments, the generating includes generating the code according to the banner layout.

In at least some embodiments, natural language description based banner creation is implemented by extracting, from a natural language request, a plurality of attributes of a desired banner, selecting, from among a plurality of processes based on the plurality of attributes, a desired process to achieve the desired banner, planning, according to the desired process, a sequence of tasks, each task configured as an input for a predetermined task model among a plurality of task models to obtain a banner component of the desired banner, and executing the desired process to obtain, for each task, the banner component as output of the predetermined task model.

In at least some embodiments, the extracting includes combining the natural language request and an extraction prompt, and applying a generative language model to the natural language request and the extraction prompt. In at least some embodiments, the extraction prompt instructs the generative language model to output the plurality of attributes in a structured format. In at least some embodiments, the structured format is one of JSON, XML, or YAML. In at least some embodiments, the extraction prompt instructs the generative language model to utilize a default attribute in response to being unable to extract a corresponding attribute among the plurality of attributes from the natural language request. In at least some embodiments, the extraction prompt instructs the generative language model to request further input in response to being unable to extract a corresponding attribute among the plurality of attributes from the natural language request. In at least some embodiments, the desired process is one of banner generation, banner editing, banner translation, banner checking, or banner Click-Through Rate (CTR) prediction. In at least some embodiments, the planning includes ordering the sequence of tasks based on dependencies between tasks. In at least some embodiments, the planning includes combining the plurality of attributes, the desired process, and a planning prompt, and applying a generative language model to the natural language request, the desired process, and the planning prompt. In at least some embodiments, the planning prompt informs the generative language model of each of the plurality of task models. In at least some embodiments, the planning includes planning a layout generation task among the sequence of tasks. In at least some embodiments, the executing includes executing the layout generation task to acquire a banner layout. In at least some embodiments, the generating includes generating the code according to the banner layout.

Further aspects are defined as A1 to A20, as follows:
A1. A non-transitory computer-readable medium including instructions that, in response to execution by one or more processors, causes performance of operations comprising:
   extracting, from a natural language request, a plurality of attributes of a desired banner;
   selecting, from among a plurality of processes based on the plurality of attributes, a desired process to achieve the desired banner;
   planning, according to the desired process, a sequence of tasks, each task configured as an input for a predetermined task model among a plurality of task models to obtain a banner component of the desired banner;
   executing the desired process to obtain, for each task, the banner component as output of the predetermined task model; and
   generating code for the desired banner based on the banner component.
A2. The computer-readable medium of aspect A1, wherein the extracting includes
   combining the natural language request and an extraction prompt, and
   applying a generative language model to the natural language request and the extraction prompt.
A3. The computer-readable medium of aspect A2, wherein the extraction prompt instructs the generative language model to output the plurality of attributes in a structured format.
A4. The computer-readable medium of aspect A3, wherein the structured format is one of JavaScript Object Notation (JSON), eXtensible Markup Language (XML), or Yet Another Markup Language (YAML).
A5. The computer-readable medium of aspect A2, wherein the extraction prompt instructs the generative language model to utilize a default attribute in response to being unable to extract a corresponding attribute among the plurality of attributes from the natural language request.
A6. The computer-readable medium of aspect A2, wherein the extraction prompt instructs the generative language model to request further input in response to being unable to extract a corresponding attribute among the plurality of attributes from the natural language request.
A7. The computer-readable medium of aspect A1, wherein the desired process is one of banner generation, banner editing, banner translation, banner checking, or banner Click-Through Rate (CTR) prediction.
A8. The computer-readable medium of aspect A1, wherein the planning includes ordering the sequence of tasks based on dependencies between tasks.
A9. The computer-readable medium of aspect A8, wherein the planning includes combining the plurality of attributes, the desired process, and a planning prompt, and applying a generative language model to the natural language request, the desired process, and the planning prompt.
A10. The computer-readable medium of aspect A9, wherein the planning prompt informs the generative language model of each of the plurality of task models.
A11. The computer-readable medium of aspect A1, wherein the planning includes planning a layout generation task among the sequence of tasks.
A12. The computer-readable medium of aspect A11, wherein the executing includes executing the layout generation task to acquire a banner layout.
A13. The computer-readable medium of aspect A12, wherein the generating includes generating the code according to the banner layout.
A14. The computer-readable medium of aspect A1, wherein the generating includes generating the code including raw image data.
A15. A method comprising:
   extracting, from a natural language request, a plurality of attributes of a desired banner;
   selecting, from among a plurality of processes based on the plurality of attributes, a desired process to achieve the desired banner;
   planning, according to the desired process, a sequence of tasks, each task configured as an input for a predetermined task model among a plurality of task models to obtain a banner component of the desired banner;
   executing the desired process to obtain, for each task, the banner component as output of the predetermined task model; and
   generating code for the desired banner based on the banner component.
A16. The method of aspect A15, wherein the extracting includes
   combining the natural language request and an extraction prompt, and
   applying a generative language model to the natural language request and the extraction prompt.
A17. The method of aspect A16, wherein the extraction prompt instructs the generative language model to output the plurality of attributes in a structured format.
A18. A device comprising:
   a controller including circuitry configured to perform operations comprising:
   extracting, from a natural language request, a plurality of attributes of a desired banner;
   selecting, from among a plurality of processes based on the plurality of attributes, a desired process to achieve the desired banner;
   planning, according to the desired process, a sequence of tasks, each task configured as an input for a predetermined task model among a plurality of task models to obtain a banner component of the desired banner;
   executing the desired process to obtain, for each task, the banner component as output of the predetermined task model; and
   generating code for the desired banner based on the banner component.
A19. The device of aspect A18, wherein the extracting includes
   combining the natural language request and an extraction prompt, and
   applying a generative language model to the natural language request and the extraction prompt.
A20. The device of aspect A19, wherein the extraction prompt instructs the generative language model to output the plurality of attributes in a structured format.

## Claims

1. A non-transitory computer-readable medium including instructions that, in response to execution by one or more processors, causes performance of operations comprising:
extracting, from a natural language request, a plurality of attributes of a desired banner;
selecting, from among a plurality of processes based on the plurality of attributes, a desired process to achieve the desired banner;
planning, according to the desired process, a sequence of tasks, each task configured as an input for a predetermined task model among a plurality of task models to obtain a banner component of the desired banner;
executing the desired process to obtain, for each task, the banner component as output of the predetermined task model; and
generating code for the desired banner based on the banner component.

2. The computer-readable medium of claim 1, wherein the extracting includes
combining the natural language request and an extraction prompt, and
applying a generative language model to the natural language request and the extraction prompt.

3. The computer-readable medium of claim 2, wherein the extraction prompt instructs the generative language model to output the plurality of attributes in a structured format, wherein preferably the structured format is one of JavaScript Object Notation (JSON), eXtensible Markup Language (XML), or Yet Another Markup Language (YAML).

4. The computer-readable medium of claim 2, wherein the extraction prompt instructs the generative language model to utilize a default attribute in response to being unable to extract a corresponding attribute among the plurality of attributes from the natural language request.

5. The computer-readable medium of claim 2, wherein the extraction prompt instructs the generative language model to request further input in response to being unable to extract a corresponding attribute among the plurality of attributes from the natural language request.

6. The computer-readable medium of claim 1, wherein the desired process is one of banner generation, banner editing, banner translation, banner checking, or banner Click-Through Rate (CTR) prediction.

7. The computer-readable medium of claim 1, wherein the planning includes ordering the sequence of tasks based on dependencies between tasks.

8. The computer-readable medium of claim 7, wherein the planning includes
combining the plurality of attributes, the desired process, and a planning prompt, and applying a generative language model to the natural language request, the desired process, and the planning prompt, wherein preferably the planning prompt informs the generative language model of each of the plurality of task models.

9. The computer-readable medium of claim 1, wherein the planning includes planning a layout generation task among the sequence of tasks.

10. The computer-readable medium of claim 9, wherein the executing includes executing the layout generation task to acquire a banner layout, wherein preferably the generating includes generating the code according to the banner layout.

11. The computer-readable medium of claim 1, wherein the generating includes generating the code including raw image data.

12. A method comprising:
extracting, from a natural language request, a plurality of attributes of a desired banner;
selecting, from among a plurality of processes based on the plurality of attributes, a desired process to achieve the desired banner;
planning, according to the desired process, a sequence of tasks, each task configured as an input for a predetermined task model among a plurality of task models to obtain a banner component of the desired banner;
executing the desired process to obtain, for each task, the banner component as output of the predetermined task model; and
generating code for the desired banner based on the banner component.

13. The method of claim 12, wherein the extracting includes
combining the natural language request and an extraction prompt, and
applying a generative language model to the natural language request and the extraction prompt, wherein preferably the extraction prompt instructs the generative language model to output the plurality of attributes in a structured format.

14. A device comprising:
a controller including circuitry configured to perform operations comprising:
extracting, from a natural language request, a plurality of attributes of a desired banner;
selecting, from among a plurality of processes based on the plurality of attributes, a desired process to achieve the desired banner;
planning, according to the desired process, a sequence of tasks, each task configured as an input for a predetermined task model among a plurality of task models to obtain a banner component of the desired banner;
executing the desired process to obtain, for each task, the banner component as output of the predetermined task model; and
generating code for the desired banner based on the banner component.

15. The device of claim 14, wherein the extracting includes
combining the natural language request and an extraction prompt, and
applying a generative language model to the natural language request and the extraction prompt, wherein preferably the extraction prompt instructs the generative language model to output the plurality of attributes in a structured format.
